Europäisches Patentamt

European Patent Office

Office européen des brevets

(11) Veröffentlichungsnummer: **0 396 153**

**A2**

(12) **EUROPÄISCHE PATENTANMELDUNG**

(21) Anmeldenummer: **90110204.6**

(22) Anmeldetag: **13.06.83**

(51) Int. Cl.⁵: **B60N 2/02**

This application was filed on 30 - 05 - 1990 as a divisional application to the application mentioned under INID code 60.

(30) Priorität: **08.07.82 DE 3225546**

(43) Veröffentlichungstag der Anmeldung: **07.11.90 Patentblatt 90/45**

(60) Veröffentlichungsnummer der früheren Anmeldung nach Art. 76 EPÜ: **0 098 414**

(84) Benannte Vertragsstaaten: **FR GB IT**

(71) Anmelder: **KEIPER RECARO GmbH & Co.** **Büchelstrasse 54-58** **D-5630 Remscheid 1(DE)**

(72) Erfinder: **Strowik, Willibald** **Albert-Schmidt-Allee 42** **D-5630 Remscheid(DE)** Erfinder: **Klüting, Bernd** **Jung-Stilling-Weg 18** **D-5808 Radevormwald(DE)** Erfinder: **Thiel, Peter** **Stockter Strasse 138** **D-5630 Remscheid(DE)** Erfinder: **Walz, Jürgen** **Gartenstrasse 22/1** **D-7015 Korntal-Münchingen(DE)** Erfinder: **Wingensiefen, Wilhelm** **Hollweg** **D-5068 Odenthal(DE)** Erfinder: **Reinmöller, Adolf** **Maxstrasse 29** **D-5630 Remscheid(DE)**

(74) Vertreter: **Buse, Karl Georg, Dipl.-Phys. et al** **Patentanwälte Dipl.-Phys. Buse Dipl.-Phys.** **Mentzel Dipl.-Ing. Ludewig Unterdörnen 114** **D-5600 Wuppertal 2(DE)**

(54) **Vorrichtung zur Höhenverstellung von Sitzen, insbesondere Kraftfahrzeugsitzen.**

(57) Bei einer Vorrichtung zur Verstellung von Sitzen ist deren Sitzträger (30) mit dem Fahrzeugboden zugeordneten Schienen (35) verbunden. Der vordere Endbereich jeden Sitzträgerseitenholmes (31 bzw. 31') ist jeweils über eine Schwinge (48) mit einer Schiene (35) drehgelenkig verbunden. Jede Schwinge weist eine Zahnstange (38) auf, in welche ein im Sitzträgerseitenholm gelagertes Ritzel (41) eingreift. Die Ritzel sind auf einer die Sitzträgerseitenholme durchquerenden Welle (52) angeordnet. Eine Sperreinrichtung (54) legt die Ritzel an den Zahnstangen zusammen mit dem Sitzträger in wählbaren Höhenlagen fest. Der hintere Endbereich jeden Sitzträgerseitenholmes (31,31') ist ebenfalls auf einer den Sitzträger (30) durchquerenden Welle (40) gelagert, die mit einem jedem Sitzträgerseitenholm zugeordneten Ritzel (41) drehfest verbunden ist. Auch diese Ritzel greifen in je eine vertikal verlaufende, an jeder Schiene festgelegte Zahnstange ein und sind ebenfalls durch eine Sperreinrichtung (54) in wählbaren Höhenlagen festlegbar. Zur Schaffung einer einfachen, in die Antriebsmittel der Ritzel integrierbaren Sperreinrichtung ist diese aus einem auf jeder Welle (40,52) aufsitzenden Schneckengetriebe (103) gebildet.

FIG.1

## Vorrichtung zur Höhenverstellung von Sitzen, insbesondere Kraftfahrzeugsitzen

Die Erfindung betrifft eine Vorrichtung zur Höhenverstellung von Sitzen, insbesondere von Kraftfahrzeugsitzen, deren Sitzträger mit dem Fahrzeugboden zugeordneten Schienen verbunden ist, wobei der vordere Endbereich jeden Sitzträgerseitenholmes jeweils über eine eine Zahnstange aufweisende Schwinge mit der zugehörigen Schiene drehgelenkig verbunden ist, und in jedem Sitzträgerseitenholm ein in die Zahnstange eingreifendes Ritzel gelagert ist, und die Ritzel auf einer die Sitzträgerseitenholme durchquerenden Welle angeordnet und über eine betätigbare Sperreinrichtung zusammen mit dem Sitzträger in wählbaren Höhenlagen stufenweise festlegbar sind, wobei der hintere Endbereich jeden Sitzträgerseitenholmes ebenfalls auf einer den Sitzträger durchquerenden Welle gelagert ist, die mit einem jedem Sitzträgerseitenholm zugeordneten Ritzel drehfest verbunden ist, wobei jedes Ritzel in eine vertikal verlaufende, an jeder Schiene festgelegte Zahnstange eingreift, und die Ritzel durch eine Sperreinrichtung in wählbaren Höhenlagen des Sitzträgers festlegbar sind.

Bei einer aus der DE-OS 29 26 450 bekannten Sitzverstellvorrichtung ist der Sitzträger in seinem hinteren Bereich derart abgestützt, daß er um eine horizontal verlaufende Achse gegenüber den dem Fahrzeugboden zugeordneten Schienen verschwenkt werden kann. Im vorderen Bereich durchquert den Sitzträger eine horizontal verschiebbar angeordnete Welle, deren Enden drehfest mit jeweils einem Ritzel verbunden sind. Diese Ritzel greifen in die Zahnstangen zweier an den Schienen abgestützter Schwingen, wodurch eine Schwenkbewegung des Sitzträgers gegenüber den Schienen verspannungsfrei möglich ist. Um die Höhenlage des Sitzträgers feststellen zu können, ist eine die in den Sitzträgerseitenholmen horizontal verschiebbare Welle aufnehmende Sperreinrichtung vorgesehen. Diese Sperreinrichtung besteht im wesentlichen aus beiderseits im vorderen Sitzbereich aus den dem Fahrzeugboden zugeordneten Schienen aufragenden Sperrstützen, die jeweils ein auf den hinteren Schwenkpunkt bezogenes, kreisbogenförmig gekrümmtes Langloch aufweisen, das zu seiner Vorderseite hin in verschiedenen Höhenlagen Sperrausnehmungen zur Aufnahme der die Ritzel überragenden Wellenenden aufweist. Zur horizontalen Verschiebung der Wellenenden in den Sitzträgerseitenholmen ist an diesen ein Hebelsystem vorgesehen, welches durch Kraftspeicher selbsttätig eine Sperrlage der Welle in den Sperrausnehmungen bewirkt, während durch eine Handhabe diese Sperrlage aufhebbar ist, wodurch sich der Sitzträger in seinem vorderen Bereich anheben bzw. absenken läßt. Dabei sind die beiderseitigen Schwenkstützen derart ausgebildet, daß die Zahnritzel im ständigen Eingriff mit der an jeder Schwenkstütze festgelegten Zahnstange bleiben und eine synchrone Hubbewegung an beiden Sitzträgerseitenholmen bewirken. Mit dieser bekannten Vorrichtung läßt sich jedoch lediglich der vordere Sitzbereich bedarfsweise anheben bzw. absenken, während der Sitzträger und damit der Sitz in seinem hinteren Bereich im wesentlichen seine Höhenlage beibehält. In vielen Fällen ist es jedoch wünschenswert, den Sitz in seiner Höhenlage universell an die Bedürfnisse des Benutzers anpassen zu können. Dazu ist auch eine Höhenverstellmöglichkeit des hinteren Sitzbereichs erforderlich.

Aus der US-PS 22 98 351 ist ebenfalls eine Höhenverstellvorrichtung für einen Sitzträger bekannt, bei der Ritzel tragende Achsen in horizontal verlaufenden Langlöchern einer Schiene angeordnet sind, während die der Höhenbewegung dienenden Zahnstangen feste Bestandteile der Sitzträgerseitenholme sind und in paralleler Beziehung zu weiteren, etwa senkrecht verlaufenden Langlöchern in den Sitzträgerseitenholmen stehen. In diese Langlöcher greifen die Ritzel tragenden Achsen ebenfalls ein. Mit dieser Lösung kann zwar auch der vordere Sitzbereich gegenüber dem hinteren Sitzbereich und und umgekehrt angehoben bzw. abgesenkt werden, wobei die einzustellende Sitzhöhenlage in Abstufungen sperrbar ist. Die Sperreinrichtung besteht aus weiteren an den Sitzträgerseitenholmen schwenkbaren Zahnstangen, die über ein zentrales Hebelsystem in und außer Eingriff mit den Ritzeln schwenkbar sind. Diese Zahnstangen werden zur Höhenverstellung des jeweiligen Sitzteilbereiches außer Eingriff von den betreffenden Ritzeln geschwenkt. Die Ritzel behalten während der Verstellphase ihre Höhenlage infolge der in die horizontalen Langlöcher eingreifenden Achsen bei und können nicht ortsfest in den Seitenträgerseitenholmen gelagert sein. Die Lagerung der die Ritzel tragenden Achsen in sich kreuzenden Langlöchern ist insofern nachteilig, als daß die Achsen nur eine lineare Abstützung in diesen Langlöchern erfahren, so daß ein starker Verschleiß und eine hohe Abnutzung der Langlöcher und der Achsen an ihren Abstützstellen in den Langlöchern erfolgt. Die Verwendung weiterer, schwenkbarer Zahnstangen zur Festlegung der Ritzel an den feststehenden Zahnstangen stellt einen Aufwand dar, dessen Verwirklichung äußerst unwirtschaftlich ist und jeden kostenbewußten Fachmann davon abhält, eine derartige Lösung zu verwenden.

Die Aufgabe der vorliegenden Erfindung besteht darin, bei einer Vorrichtung zur Höhenverstellung von Sitzen der vorgenannten Art eine Sperr-

3

einrichtung zu schaffen, die in die Antriebsmittel der Ritzel integrierbar ist.

Diese Aufgabe ist erfindungsgemäß dadurch gelöst, daß die Sperreinrichtung aus einem auf jeder Welle aufsitzenden Schneckengetriebe gebildet ist, dessen Schneckenrad drehfest mit der die in die Zahnstangen eingreifenden Ritzel tragenden Welle verbunden ist, während die Schnecke das Antriebsglied für die an beiden Enden einer Welle angeordneten Ritzel bildet. Die Verwendung von Schneckengetrieben ist insofern vorteilhaft, als daß derartige Schneckengetriebe selbsthemmend sind und keine besonderen Bremseinrichtungen benötigt werden. Dabei ist vorzugsweise das jeder Welle zugeordnete Schneckengetriebe auf einer Seite des Sitzträgers an dessen gleichem Seitenholm festgelegt, an welchem gleichfalls ein zentraler, mit beiden Schneckengetrieben verbundener Stelltrieb angeordnet ist, durch welchen die Schneckengetriebe je nach Bedarf wechselweise antreibbar sind. Nach einer weiteren Ausgestaltung der Erfindung weist der zentrale Stelltrieb einen am Sitzträgerseitenholm festgelegten Lagerkörper auf, welcher mit zwei im Abstand zueinander angeordneten Lageraugen auf der Innenseite des Sitzträgerseitenholmes vorspringt, in denen einander zugekehrte Kegelräder gelagert sind, wovon jedes in Drehverbindung mit einem Schneckengetriebe steht, wobei am Lagerkörper eine horizontal bewegbare Lagerplatte gehalten ist, die einerseits ein weiteres, mit einem Triebritzel gleichachsig gelagertes und drehverbundenes Kegelrad haltert und an der andererseits eine Lagernabe zur Aufnahme eines die Lagerplatte bewegenden Schlüsselzapfen angeordnet ist, der von einer einen mit dem Triebritzel in Eingriff befindlichen Innenzahnkranz aufweisenden Handhabe umgriffen ist, deren Außenseite ein mit dem Schlüsselzapfen drehfest verbundener Stellgriff vorgelagert ist. Dabei ist die Lagerplatte vorzugsweise zusammen mit der daran gelagerten, das Kegelrad aufweisenden Ritzelwelle sowie der die Handhabe und den Schlüsselzapfen aufnehmenden Lagernabe horizontal verschiebbar an dem mit dem Sitzträgerseitenholm verbundenen Lagerkörper gehalten. Statt der Verwendung einer horizontal verschiebbaren Lagerplatte ist es nach einer anderen Ausgestaltung der Erfindung auch möglich, eine die das Kegelrad aufweisende Ritzelwelle sowie die den Schlüsselzapfen und die Handhabe aufnehmende Lagernabe halternde Lagerplatte als Schwinghebel auszubilden.

Die Erfindung ist auf der Zeichnung dargestellt und wird nachfolgend näher erläutert. Es zeigen:

Fig. 1 ein mit den dem Fahrzeugboden zugeordneten Schienen verbundener Sitzträger in einer Seitenansicht, bei dem Schneckengetriebe als Sperreinrichtungen Verwendung finden, die über eine zentral angeordnete Stelleinrichtung betätigbar sind,

Fig. 2 die die zentrale Stelleinrichtung und die Schneckengetriebe aufweisenden Sitzträgerseitenholme in einer Draufsicht,

Fig. 3 die vorderendige Abstützung des Sitzträgers an der dem Fahrzeugboden zugeordneten Schiene unter Zwischenschaltung einer an der Schiene schwenkbar gelagerten Schwinge in einem Längsschnitt nach der Linie III - III von Fig. 1,

Fig. 4 die zentrale Handverstelleinrichtung in einem Vertikalschnitt nach der Linie IV - IV von Fig. 2,

Fig. 5 die aus Fig. 4 ersichtliche, zentrale Handverstelleinrichtung in einem Horizontalschnitt nach der Linie V - V von Fig. 4,

Fig. 6 die zentrale Handverstelleinrichtung in einem Vertikalschnitt nach der Linie VI - VI von Fig. 4,

Fig. 7 ein weiteres Ausführungsbeispiel einer zentralen Handverstelleinrichtung mit einer durch einen Schlüsselzapfen schwenkbaren, den wechselweisen Zahneingriff der Kegelräder bewirkenden Schwinge, in einer Ansicht bei abgenommener Handhabe und in diesem einliegenden Stellgriff,

Fig. 8 die aus Fig. 7 ersichtliche Stelleinrichtung in einem Längsschnitt nach der Linie VIII - VIII von Fig. 7,

Fig. 9 den manuell betätigbaren, aus den Fig. 7 und 8 ersichtlichen Stelltrieb in einem Horizontalschnitt.

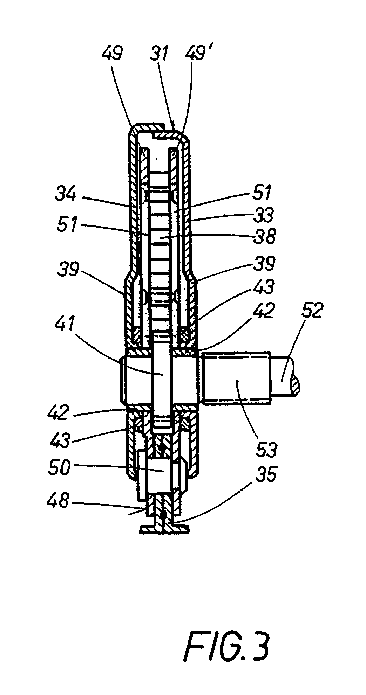

Der aus einer Rückenlehne und einem Sitzteil gebildete, nicht dargestellte Fahrzeugsitz läßt sich auf einem Sitzträger 30 befestigen, der aus zwei sandwichartig zusammengesetzten Sitzträgerseitenholmen 31 und 31' sowie diese miteinander verbindenden Querträgern 32 und 32' gebildet ist. Jeder Sitzträgerseitenholm ist bei den dargestellten Ausführungsbeispielen aus zwei Seitenschalen 33 und 34 zusammengesetzt, wobei jede Seitenschale einen C-förmigen Querschnitt aufweist und die Seitenschalen mit ihrer offenen Seite zueinander gekehrt sind, während die äußere Seitenschale 34 die innere Seitenschale am Randbereich übergreift und mit dieser verschweißt ist. Unterhalb der Sitzträgerseitenholme 31 und 31' befinden sich dem Fahrzeugboden zugeordnete Schienen 35. Jede Schiene 35 besteht aus zwei Winkelstücken, die zu einer Einheit mit T-förmigem Querschnitt miteinander vereinigt sind. Im hin teren Sitzbereich weist jede Schiene 35 einen nach oben aufragenden Stützsteg 36 auf, in welchem sich ein in vertikaler Richtung erstreckendes Langloch 37 befindet. Im Bereich dieses Langloches ist der Stützsteg 36 der Schiene 35 derart aufgeweitet, daß zwischen den beiden Stegteilen ein Freiraum entsteht, in welchem eine Zahnstange 38 angeordnet und mit dem Stützsteg 36, beispielsweise durch Schweißen, fest verbunden ist. Der Stützsteg 36 jeder Schiene 35 ragt in den Innenraum jeden Sitzträgerseitenholmes 31 und 31′ im hinteren Sitzbereich ein, wobei es sich versteht, daß die Unterseite des Sitzträgers in diesen Bereichen offen ist. Jeder Sitzträgerseitenholm 31 und 31′ weist im Bereich des in seinen Innenraum einragenden Stützsteges 36 in seinen Seitenschalen 33 und 34 Lageraugen 39 auf, in denen das Ende einer Welle 40 gelagert ist, wobei die beiderseitigen Wellenenden ein mit diesen drehfest verbundenes Ritzel 41 aufweisen, wobei jedes Ritzel in den Freiraum des Stützsteges 36 eingreift und mit der darin befestigten Zahnstange 38 kämmt. Dabei sind die beiderseitig sich an das Ritzel anschließenden Wellenstümpfe von Lagerbuchsen 42 umgriffen (Fig. 3), die sich einerseits in den Lageraugen 39 der Sitzträgerseitenholme 31 und 31′ abstützen und andererseits im Langloch 37 des jeweiligen Stützsteges 36 der Schienen 35 in vertikaler Richtung geführt sind. Dabei mag zur Verschleißminderung der Führungsbereich im Langloch 37 eines jeden Stützsteges durch ein Hutprofil ausgekleidet sein. Zwischen der Außenseite des Stützsteges 36 und der Innenseite der Seitenschalen 33 und 34 eines jeden Sitzträgerseitenholmes 31 und 31′ mögen im wellennahen Bereich der Lageraugen 39 Distanzringe angeordnet sein, durch welche die Sitzträgerseitenholme 31 und 31′ mittig und mit einem ausreichenden, Reibung vermeidenden Spiel zur Längsachse der Schienen 35 gehalten sind.

Im vorderen Sitzbereich greift in jeden Sitzträgerseiten holm 31 und 31′ eine Schwinge 48 ein, die aus zwei im Abstand zueinander angeordneten Laschen 49 und 49′ gebildet ist (Fig. 3), die beiderseits des Mittelstegs der Schienen 35 im vorderen Sitzbereich auf einem den Steg der Schiene 35 durchdringenden Lagerbolzen 50 schwenkbar abgestützt sind. In den Laschen 49 und 49′ ist jeweils ein dem Langloch 37 des Stützsteges 36 entsprechendes Langloch 51 angeordnet, wobei zwischen den Laschen 49 und 49′ ebenfalls eine Zahnstange 38 befestigt ist. Jede Schwinge 48 wird ebenfalls von den Enden einer Welle 52 durchgriffen, wobei die Wellenenden ebenfalls mit einem Ritzel 41 drehfest verbunden sind, das jeweils mit der Zahnstange 38 der Schwinge 48 im Eingriff ist. Beiderseits des Ritzels 41 weisen die Wellenenden Lagerabschnitte auf, die sich über Lagerbuchsen 42 in den vorderseitigen Lageraugen 39 der Sitzträgerseitenholme 31 bzw. 31′ abstützen. Gleichfalls greifen die Lagerbuchsen 42 in das Langloch 51 der Schwinge 48. Zwischen den Außenseiten der Schwinge 48 und den Innenseiten der Lageraugen 39 sind im Bereich der Enden der Welle 52 auch hier Distanzringe 43 angeordnet, wodurch die Längsmittenzuordnung von Schwingen 48 und dem jeweiligen Sitzträgerseitenholm 31 bzw. 31′ erhalten bleibt.

Als Sperreinrichtung 54,zur Fixierung der an den Zahnstangen 38 erreichten Höhenlage der Ritzel 41 und damit auch des Sitzträgers 30,lassen sich Schneckengetriebe 103 verwenden, die eine Selbsthemmung aufweisen und nach Unterbrechung des Antriebes die eingenommene Stellage selbsttätig aufrechterhalten. Das nicht dargestellte Schneckenrad eines jeden Schneckengetriebes 103 ist drehfest mit einem Profilabschnitt 53 der jeweiligen Welle 40 bzw. 52 verbunden. Die ebenfalls nicht näher dargestellte Schnecke eines jeden Schneckengetriebes 103 bildet demnach das Antriebsglied für die Ritzel 41. Ein jeder Welle 40 bzw. 52 zugeordnetes Schneckengetriebe 103 ist auf nur einer Seite des Sitzträgers 30, beispielsweise am Sitzträgerseitenholm 31, befestigt. Zwischen den Wellen 40 und 52 ist am Sitzträgerseitenholm 31 ein manuell betätigbarer Stelltrieb 104 vorgesehen, der nachfolgend näher zu erläutern ist.

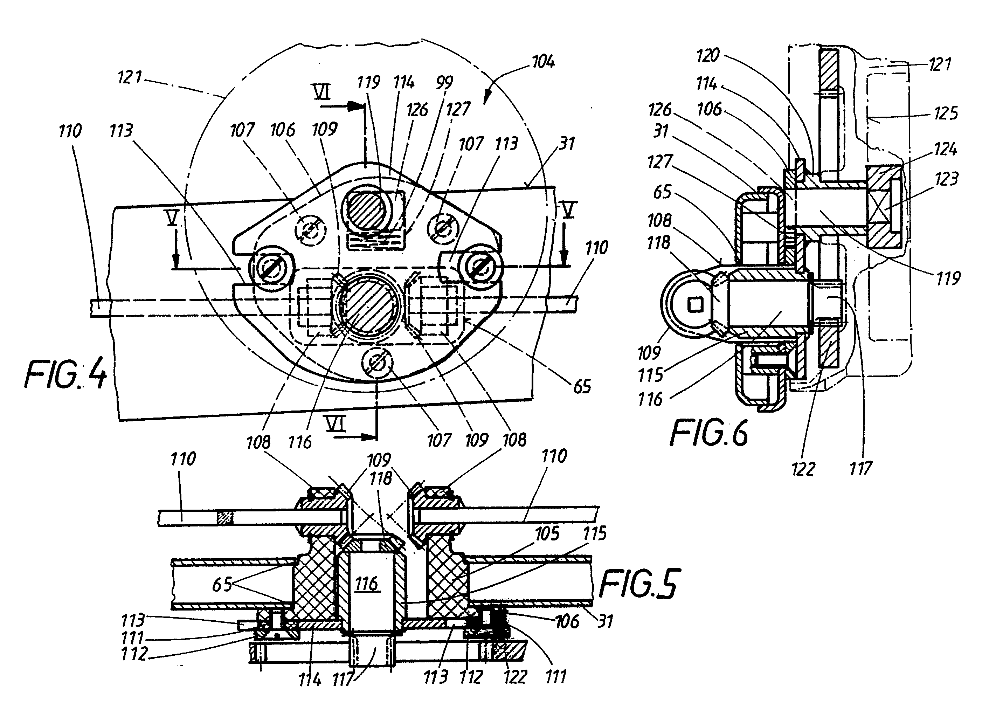

Der in den Fig. 4 bis 6 dargestellte, zentrale Stelltrieb 104 weist zunächst einen Lagerkörper 105 auf, der mit seiner Lagerplatte 106 an der Außenseite des Sitzträgerseitenholmes 31 anliegt und über die Schrauben 107 mit diesem fest verbunden ist. Auf der der Lagerplatte 106 gegenüberliegenden Seite treten aus dem Lagerkörper 105 zwei im Abstand zueinander angeordnete Lageraugen 108 aus, die gegenüber der Innenseite des Sitzträgerseitenholmes 31 vorspringen. In diesen Lageraugen 108 ist jeweils ein Kegelrad 109 drehbar gelagert, jedoch in axialer Richtung unverschiebbar angeordnet. Jedes dieser Kegelräder 109 ist über, beispielsweise eine flexible Welle 110 mit der Schnecke eines Schneckengetriebes 103 drehmomentübertragend verbunden. An der Lagerplatte 106 sind in horizontalem Abstand zueinander Führungsstücke 111 mittels Andruckscheiben 112 verschraubt, wobei die Führungsstücke 111 von horizontal verlaufenden Schlitzen 113 einer Lagerplatte 114 übergriffen sind. In mit den Kegelradmitten übereinstimmender Mittelebene ist mit der Lagerplatte eine Lagerhülse 115, beispielsweise durch Einpressen, fest verbunden, in der ein Wellenstück 116 drehbar, jedoch axial unverschiebbar gelagert ist, das auf der Außenseite des Sitzträgerseitenholmes 31 mit einem Triebritzel 117, gegebenenfalls einstückig, verbunden ist, während das Wellenstück 116 auf der anderen Seite mit einem zwischen die Lageraugen 108 greifenden Kegelrad 118 drehfest verbunden ist. Dieses Kegelrad 118 ist derart bemessen, daß es bei Eingriff in das eine Kegelrad 109 einen Abstand zum anderen, gegenüberliegenden Kegelrad aufweist. Durch Längsverschiebung der Lagerplatte 114 gegenüber dem Lagerkörper 105 läßt sich das Kegelrad 118 aus seiner aus Fig. 5 ersichtlichen Eingriffslage nach rechts verschieben, so daß das Kegelrad 118 dann mit dem rechten Kegelrad 109 in Eingriff kommen kann, während die Eingriffsverbindung mit dem linken Kegelrad 109 gleichzeitig gelöst wird. Die Verschiebebewegung der Lagerplatte 114 wird über einen Schlüsselzapfen 119 bewirkt, der in einer mit der Lagerplatte 114 drehfest verbundenen, im Abstand zur Lagerhülse 115 angeordneten Lagernabe 120 gelagert ist. Auf dieser Lagernabe ist ein in den Fig. 4 und 6 in strichpunktierten Linien dargestelltes Handrad 121 gelagert, das einen mit dem Triebritzel 117 kämmenden Innenzahnkranz 122 aufweist. Der Schlüsselzapfen 119 weist vorderendig einen Mitnehmerabschnitt 123 auf, mit dem ein Stellgriff 124 verbunden ist, der in eine Kreisausnehmung 125 des Handrades 121 eingebettet ist und das Handrad in axialer Richtung festlegt. Am hinteren Ende des Schlüsselzapfens 119 ist eine Bartplatte 126 mit dem Schlüsselzapfen 119 fest verbunden, die in ein Stellfenster 127 der fest mit dem Sitzträgerseitenholm 31 verbundenen Lagerplatte 106 eingreift. Diese Bartplatte 126 ist von einer im Stellfenster 127 angeordneten Rückstellfeder 99 beaufschlagt, so daß die Bartplatte nach jedem Stellvorgang in ihre horizontale Sperrlage gelangt.

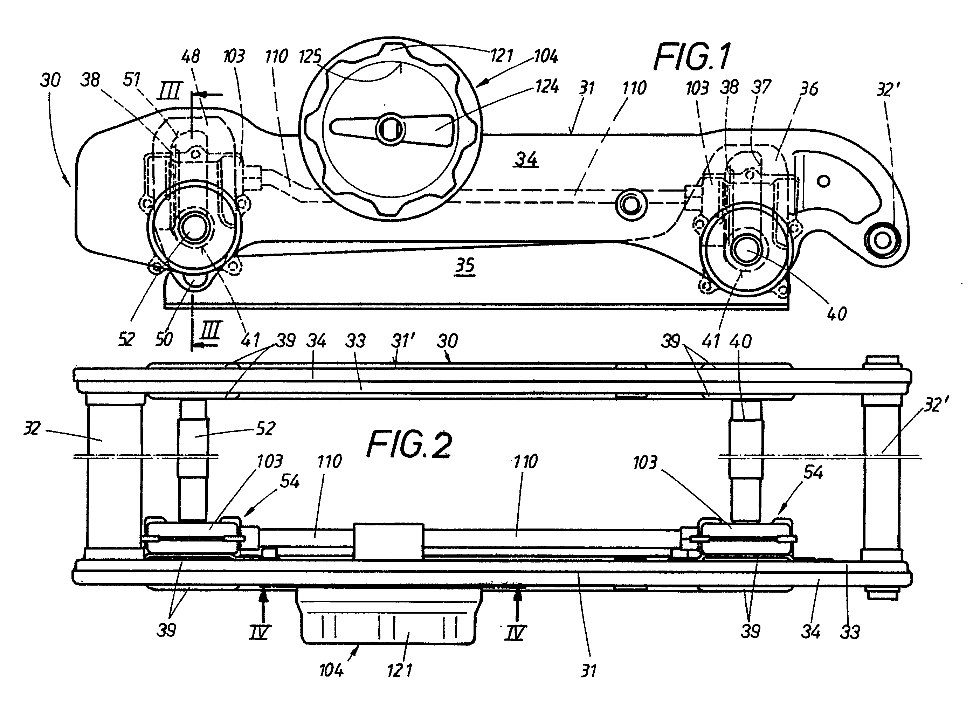

Der Stellgriff 124 läßt sich nun um 180° zwischen zwei Endlagen drehen, wobei über die im Stellfenster 127 der ortsunveränderlichen Lagerplatte 106 angeordnete Bartplatte 126 die Lagerplatte 114 zusammen mit der Lagerhülse 115 und der Lagernabe 120 horizontal mittels der auf den Führungsstücken 111 gleitenden Schlitzen 113 verschoben wird. Dabei gelangt das Kegelrad 118 entweder in die aus Fig. 5 ersichtliche oder entgegengesetzte Eingriffslage, wodurch das Handrad 121 mit dem der Welle 52 zugeordneten Schneckengetriebe 103 drehverbunden ist. Bei dieser aus Fig. 5 ersichtlichen Positionierung der Lagerplatte 114 erfolgt durch Drehung des Handrades 121 eine Übertragung dieser Drehbewegung über den Innenzahnkranz 122, das damit kämmende Triebritzel 117 und das gleichachsig mitdrehende Kegelrad 118 auf das linke Kegelrad 109, das über die flexible Welle 110 mit dem der Welle 52 zugeordneten Schneckengetriebe 103 am vorderen Sitzbereich verbunden ist. Somit wird die Drehbewegung am Handrad im einen oder anderen Drehsinn auf das mit der Zahnstange 38 der Schwinge 48 kämmende Ritzel 41 weitergegeben, wodurch der Sitzträger 30 im Bereich der Welle 52 angehoben bzw. abgesenkt werden kann. Um jedoch den Sitzträger in seinem der Welle 40 zugehörigen hinteren Bereich verstellen zu können, ist zunächst der Stellgriff 124 entgegen der aus Fig. 1 ersichtlichen Stellung um 180° zu drehen, so daß wiederum über die im Stellfenster 127 verschwenkende Bartplatte 126 die Lagerplatte 114 und die daran drehbar gelagerten Bauteile mit verschoben werden. Das Kegelrad 118 kommt dann mit dem in Fig. 5 auf der rechten Seite dargestellten Kegelrad in Eingriff, so daß die Handraddrehbewegung über die entsprechenden Bauteile auf das der Welle 40 zugeordnete Schneckengetriebe 103 des hinteren Sitzbereiches übertragen wird.

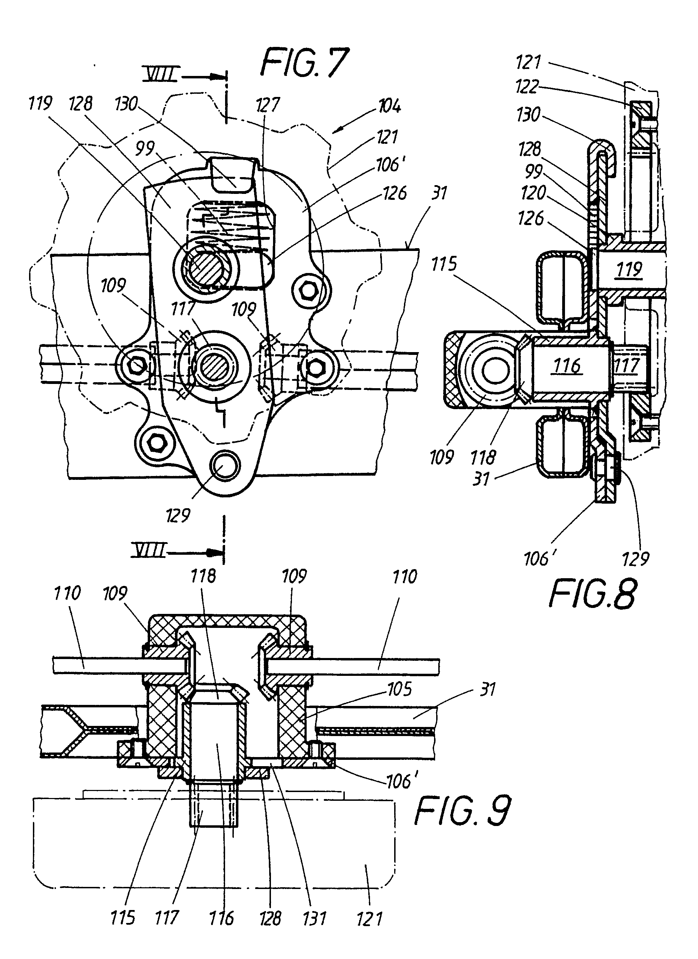

Abweichend von dem aus den Fig. 4 bis 6 ersichtlichen Ausführungsbeispiel eines zentralen Stelltriebes weist der aus den Fig. 7 bis 9 ersichtliche Stelltrieb statt einer horizontal verschiebbaren Lagerplatte einen Schwinghebel 128 auf. An diesem Schwinghebel ist einerseits die Lagerhülse 115 und andererseits die Lagernabe 120 befestigt, wobei auf der letzteren das den Innenzahnkranz 122 aufweisende Handrad 121 drehbar gelagert ist. Außerdem ist in der Lagernabe 120 ebenfalls ein Schlüsselzapfen 119 gelagert, dessen Bartplatte 126 in ein Stellfenster 127 der fest mit dem Sitzträgerseitenholm 31 verbundenen Lagerplatte 106' eingreift. Der Schwinghebel 128 ist unterhalb der Lagerhülse 115 über einen Gelenkbolzen 129 mit der Lagerplatte 106' drehgelenkig verbunden. Zur axialen Lagesicherung des Schwinghebels 128 gegenüber der Lagerplatte 106 weist diese oberendig einen den Schwinghebel 128 übergreifenden Führungsfinger 130 auf. Abgesehen davon, daß die Lagerplatte 106' eine Ausnehmung 131 zum eine Schwingbewegung zulassenden Durchtritt der Lagerhülse 155 aufweist, stimmt die Ausbildung der übrigen Bauteile des aus den Fig. 7 bis 9 ersichtlichen Stelltriebes 104 im wesentlichen mit denjenigen Bauteilen des aus den Fig. 4 bis 6 ersichtlichen Stelltriebes überein. Wenn bei dem aus den Fig. 7 bis 9 ersichtlichen Stelltrieb der dort nicht dargestellte, jedoch ebenfalls vorhandene, Stellgriff 124 um 180° gedreht wird, so verschwenkt auch über den Schlüsselzapfen 119 die Bartplatte 126 im Stellfenster 127 der Lagerplatte 106'. Dadurch wird der Schwinghebel 128 mit den daran befindlichen Bauteilen entweder in die aus den Fig. 7 und 9 ersichtliche Lage gebracht oder aber derart verschwenkt, daß das Kegelrad 118 mit dem in Fig. 9 auf der rechten Seite befindlichen Kegelrad 109 im Eingriff ist. Dadurch ergeben sich wiederum die gleichen Stellverhältnisse wie bei der zuvor beschriebenen Lösung, so daß entweder über die Welle 52 die damit verbundenen Ritzel 41 in der Zahnstange 38 der Schwinge 48 aufwärts oder abwärts wälzt und damit den vorderen Sitzbereich in der Höhenlage verstellt oder aber über die der Welle 40 zugeordneten beiderseitig angeordneten Ritzel 41 die Höhenlage des hinteren Sitzbereiches verstellt.

Bei den zuvor beschriebenen Ausführungsbeispielen sind die Schienen 35, wie oben erwähnt, aus zu einer T-förmigen Schiene zusammengesetzten Winkelstücken gebildet. Diese Schiene kann gegebenenfalls auf einer Führungsschienenanordnung oder aber, wenn keine Sitzlängsver-

9 EP 0 396 153 A2 10

schiebung gewünscht wird, unmittelbar auf dem Fahrzeugboden angeordnet werden.

Wie bereits erwähnt, geben die dargestellten und vorbeschriebenen Ausführungen die Erfindung lediglich beispielsweise wieder, die keinesfalls allein darauf beschränkt ist. Es sind vielmehr noch mancherlei andere Ausführungen und Ausgestaltungen der Erfindung möglich.

### Bezugszeichenliste:

30 Sitzträger
31 Sitzträgerseitenholm
31′ Sitzträgerseitenholm
32 Querträger
32′ Querträger
33 Seitenschale
34 Seitenschale
35 Schiene
36 Stützsteg
37 Langloch
38 Zahnstange
39 Lagerauge
40 Welle
41 Ritzel
42 Lagerbuchse
43 Distanzring
48 Schwinge
49 Lasche
49′ Lasche
50 Lagerbolzen
51 Langloch
52 Welle
53 Profilabschnitt
54 Sperreinrichtung
99 Rückstellfeder
103 Schneckengetriebe
104 Stelltrieb
105 Lagerkörper
106 Lagerplatte
106′ Lagerplatte
107 Schraube
108 Lagerauge
109 Kegelrad
110 flexible Welle
111 Führungsstück
112 Andruckscheibe
113 Schlitz
114 Lagerplatte
115 Lagerhülse
116 Wellenstück
117 Triebritzel
118 Kegelrad
119 Schlüsselzapfen
120 Lagernabe
121 Handrad

122 Innenzahnkranz
123 Mitnehmerabschnitt
124 Stellgriff
125 Kreisausnehmung
126 Bartplatte
127 Stellfenster
128 Schwinghebel
129 Gelenkbolzen
130 Führungsfinger
131 Ausnehmung

### Ansprüche

1.) Vorrichtung zur Höhenverstellung von Sitzen, insbesondere Kraftfahrzeugsitzen, deren Sitzträger (30) mit dem Fahrzeugboden zugeordneten Schienen (35) verbunden ist, wobei der vordere Bereich jeden Sitzträgerseitenholmes (31,31′) jeweils über eine eine Zahnstange (38) aufweisende Schwinge (48) mit der zugehörigen Schiene (35) drehgelenkig verbunden ist und in jedem Sitzträgerseitenholm (31,31′) ein in die Zahnstange (38) eingreifendes Ritzel (41) gelagert ist, und die Ritzel (41) auf einer die Sitzträgerseitenholme durchquerenden Welle (52) angeordnet und über eine betätigbare Sperreinrichtung (54) zusammen mit dem Sitzträger (30) in wählbaren Höhenlagen stufenweise festlegbar sind, wobei der hintere Endbereich jeden Sitzträgerseitenholmes (31,31′) ebenfalls auf einer den Sitzträger (30) durchquerenden Welle (40) gelagert ist, die mit einem jedem Sitzträgerseitenholm zugeordneten Ritzel (41) drehfest verbunden ist, wobei jedes Ritzel (41) in eine vertikal verlaufende, an jeder Schiene (35) festgelegte Zahnstange (38) eingreift, und die Ritzel durch eine Sperreinrichtung (54) in wählbaren Höhenlagen des Sitzträgers (30) festlegbar sind, **dadurch gekennzeichnet,** daß die Sperreinrichtung (54) aus einem auf jeder Welle (40 bzw. 52) aufsitzenden Schneckengetriebe (103) gebildet ist, dessen Schneckenrad drehfest mit der die in die Zahnstangen (38) eingreifenden Ritzel (41) tragenden Welle (40 bzw. 52) verbunden ist, während die Schnecke das Antriebsglied für die an beiden Enden einer Welle angeordneten Ritzel (41) bildet.

2.) Vorrichtung nach Anspruch 1, dadurch gekennzeichnet, daß das jeder Welle (40 bzw. 52) zugeordnete Schneckengetriebe (103) auf einer Seite des Sitzträgers (30) an dessen gleichem Seitenholm (31) festgelegt ist, an dem gleichfalls ein zentraler, mit beiden Schneckengetrieben (103) verbundener Stelltrieb (104) angeordnet ist, durch welchen die Schneckengetriebe (103) je nach Bedarf wechselweise antreibbar sind.

3.) Vorrichtung nach Anspruch 2, dadurch gekennzeichnet, daß der zentrale Stelltrieb (104) einen am Sitzträgerseitenholm (31) festgelegten Lagerkörper (105) aufweist, welcher mit zwei im Abstand zueinander angeordneten Lageraugen (108) auf der Innenseite des Sitzträgerseitenholmes vorspringt, in denen einander zugekehrte Kegelräder (109) gelagert sind, wovon jedes in Drehverbindung mit einem Schneckengetriebe (103) steht, wobei am Lagerkörper eine horizontal bewegbare Lagerplatte (114) gehaltert ist, die einerseits ein weiteres, mit einem Triebritzel (117) gleichachsig gelagertes und drehverbundenes Kegelrad (118) haltert und an der andererseits eine Lagernabe (120) zur Aufnahme eines die Lagerplatte bewegenden Schlüsselzapfens (119) angeordnet ist, der von einer einen mit dem Triebritzel (117) im Eingriff befindlichen Innenzahnkranz aufweisenden Handhabe (121) umgriffen ist, deren Außenseite ein mit dem Schlüssel zapfen (119) drehfest verbundener Stellgriff (124) vorgelagert ist.

4.) Vorrichtung nach Anspruch 3, dadurch gekennzeichnet, daß die Lagerplatte (114) zusammen mit der daran gelagerten, das Kegelrad (118) aufweisenden Ritzelwelle (116) sowie der die Handhabe (121) und den Schlüsselzapfen (119) aufnehmenden Lagernabe (120) horizontal verschiebbar an dem mit dem Sitzträgerseitenholm verbundenen Lagerkörper (105) gehaltert ist.

5.) Vorrichtung nach Anspruch 3, dadurch gekennzeichnet, daß die die das Kegelrad (118) aufweisende Ritzelwelle sowie die den Schlüsselzapfen (119) und die Handhabe (121) aufnehmende Lagernabe (120) halternde Lagerplatte als Schwinghebel (128) ausgebildet ist.

FIG.1

FIG.2

FIG. 3

FIG.6

FIG.5

FIG.4

EP 0 396 153 A2

FIG.7

FIG.8

FIG.9